# EUROPEAN PATENT SPECIFICATION

(11) **EP 3 000 631 B1**
(45) Date of publication and mention of the grant of the patent: **08.08.2018**
(21) Application number: 15169957.6
(22) Date of filing: 29.05.2015
(51) Int. Cl.: B60D 1/64, B60T 17/04

(54) **DEVICE FOR THE TOWING VEHICLE-TRAILER CONNECTION**
VERBINDUNGSSYSTEM FÜR ZUGFAHRZEUG-ANHÄNGER
SYSTÈME DE CONNECTION TRACTEUR-REMORQUE

(30) Priority: 30.05.2014 IT MO20140158
(43) Date of publication of application: 30.03.2016
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 371 642
- EP-A1- 2 591 963
- EP-A1- 2 610 122
- EP-A2- 0 167 968
- EP-A2- 2 631 131
- WO-A2-2012/095389
- DE-U1-202006 016 234
- FR-A1- 2 268 674
- GB-A- 1 534 253
- US-A- 4 030 757

## Description

The present invention relates to device for the towing vehicle-trailer connection.

Similar devices are known for example from the patent documents WO 2012/095389 A2 or DE 202006 016 234 U1.

As is known, to date towing vehicles are connected to the relative trailer through a connection device comprising a male coupling associated with the towing vehicle and a relative female coupling associated with the trailer.

More particularly, such connection device allows putting in communication the braking system of the towing vehicle with that of the trailer, so that the braking of the towing vehicle operated by the operator also causes the braking of the towed trailer.

The braking system of the trailer is then driven by the braking system of the prime mover in order to synchronize the braking forces acting on same.

Some recently introduced regulations require the connection device between the towing vehicle and its trailer to have a pair of male couplings able to be inserted inside a pair of relative female couplings, of which one is connected to the braking system of the trailer and the other to the parking and/or automatic brake of the trailer itself, in such a way that, if the aforementioned male couplings detach from the relative female couplings, and the oil supply is therefore interrupted to the braking system of the trailer, the relative parking and/or automatic brake starts operating.

The main aim of the present invention is to provide a device for the towing vehicle-trailer connection which allows ensuring the contemporary release of both male couplings from the relative female couplings.

In fact, to ensure the connection device is working properly and the parking and/or automatic brake automatically operate, both male couplings must have come out of the relative female couplings.

Within this aim, one object of the present invention is to ensure the disconnection of the male couplings associated with the towing vehicle from the relative female couplings in emergency conditions as well, or in the event of the trailer tow bar breaking. In this situation, in fact, the trailer would be towed only by the pipes of the hydraulic system, which would be exposed to a high risk of breaking, creating the risk of the oil contained in them pouring onto the road.

Another object of the present invention is to provide a device for the towing vehicle-trailer connection which allows to overcome the mentioned drawbacks of the prior art within the ambit of a simple, rational, easy, effective use and low cost solution.

The objects stated above are achieved by the present device for the towing vehicle-trailer connection according to claim 1.

Other characteristics and advantages of the present invention will become better evident from the description of a preferred but not exclusive embodiment of a device for the towing vehicle-trailer connection, illustrated by way of an indicative, but non-limiting, example in the accompanying drawings, in which:

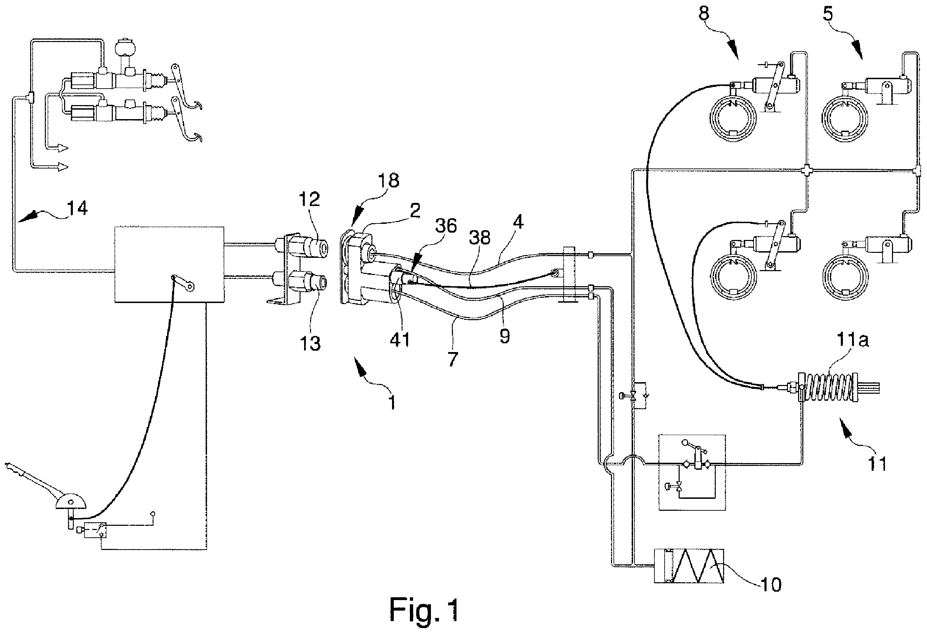

Figure 1 is a diagram representing the hydraulic connections of the device according to the invention;

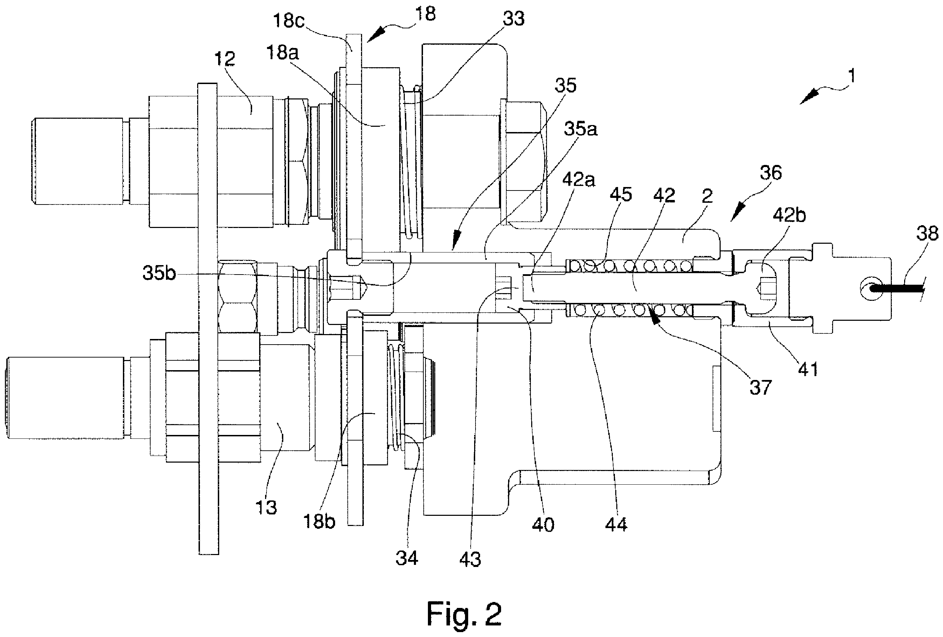

Figure 2 is a side elevation view, partially sectioned, of a device according to the invention with the locking element in the release position;

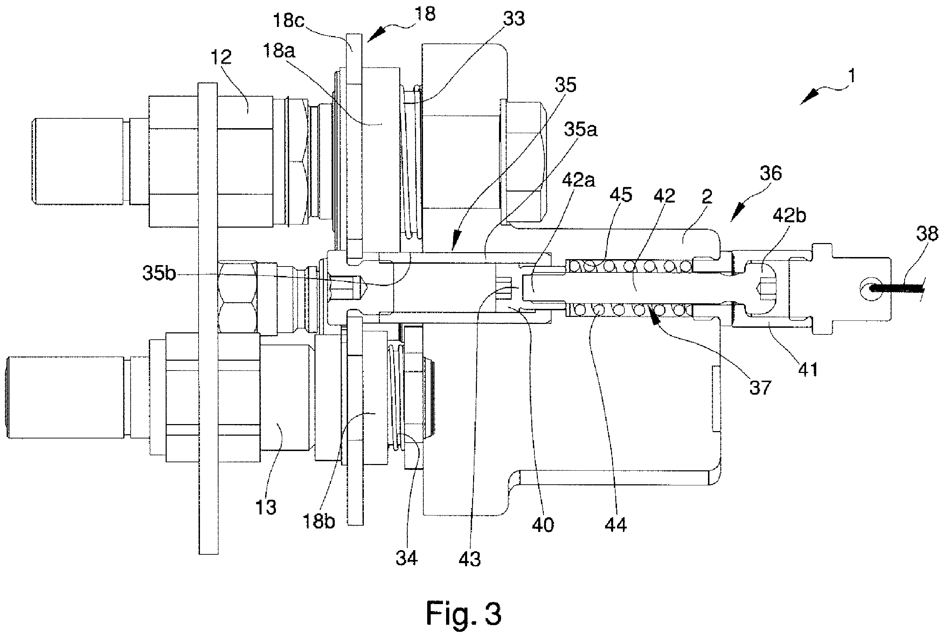

Figure 3 is a side elevation view, partially sectioned, of the device of figure 2 with the locking element in the fastening position;

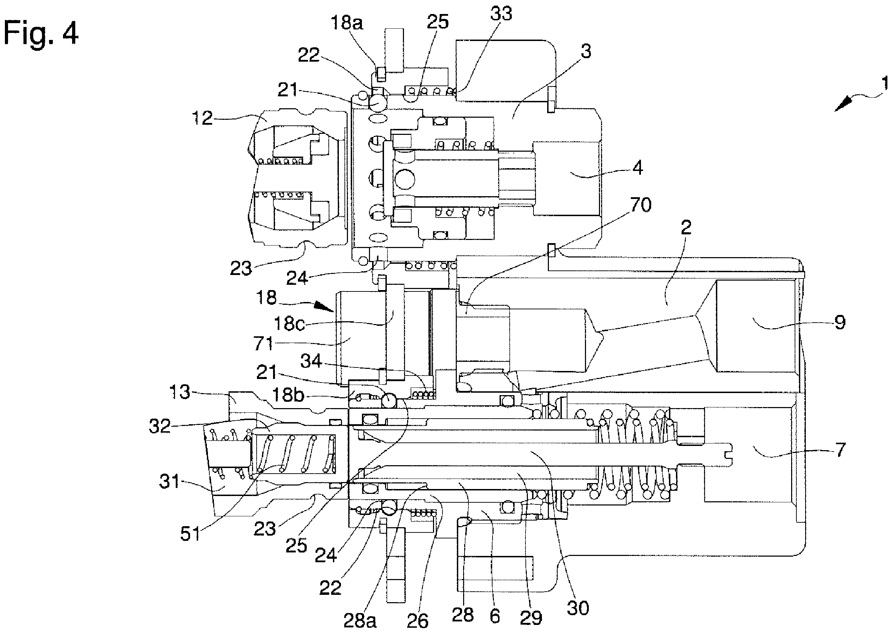

Figure 4 is a sectional view of the device of Figure 2, with the male couplings arranged externally to the relative female couplings;

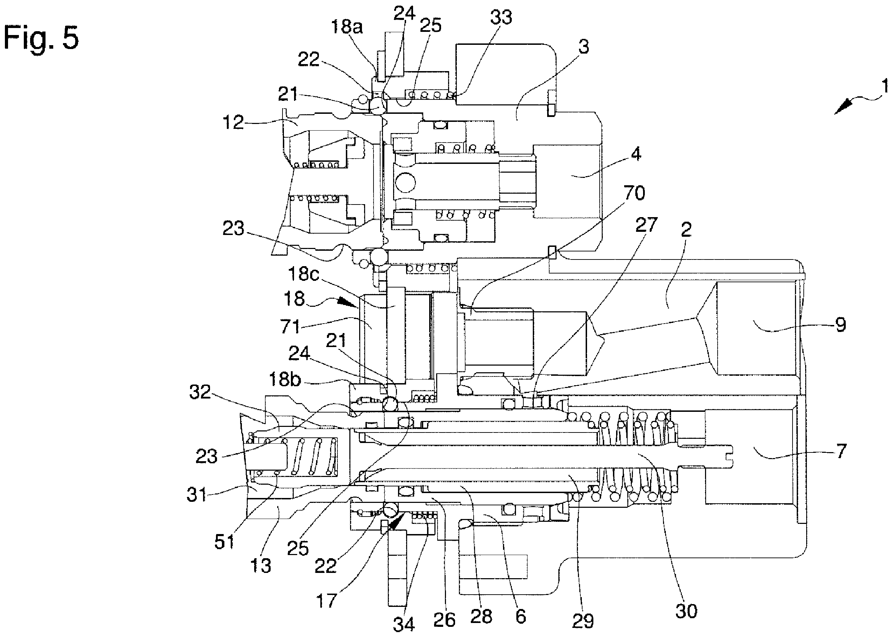

Figure 5 is a sectional view of the coupling of Figure 2, with the male couplings in a first position of insertion within the relative female couplings;

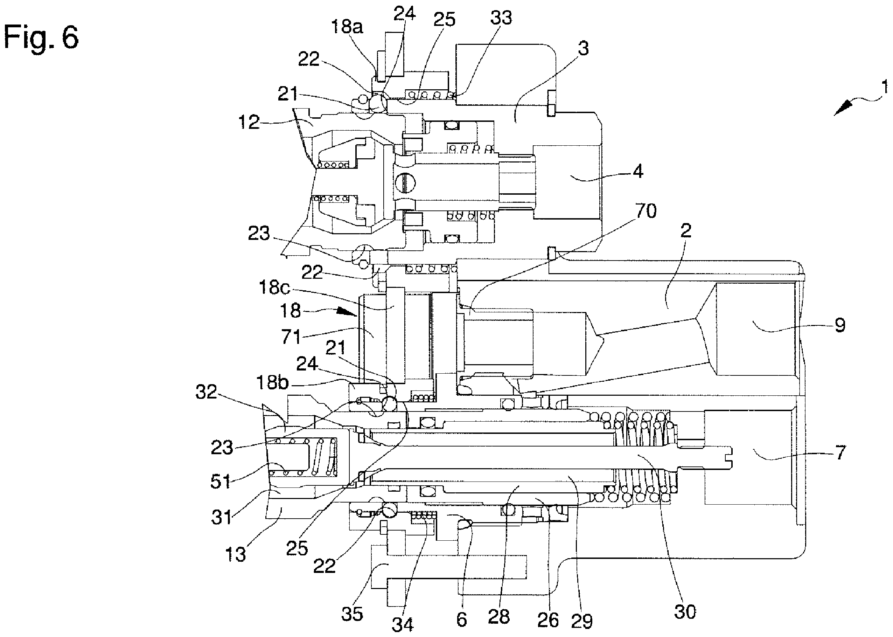

Figure 6 is a sectional view of the device of Figure 2 with the male couplings in a second position of insertion within the relative female couplings;

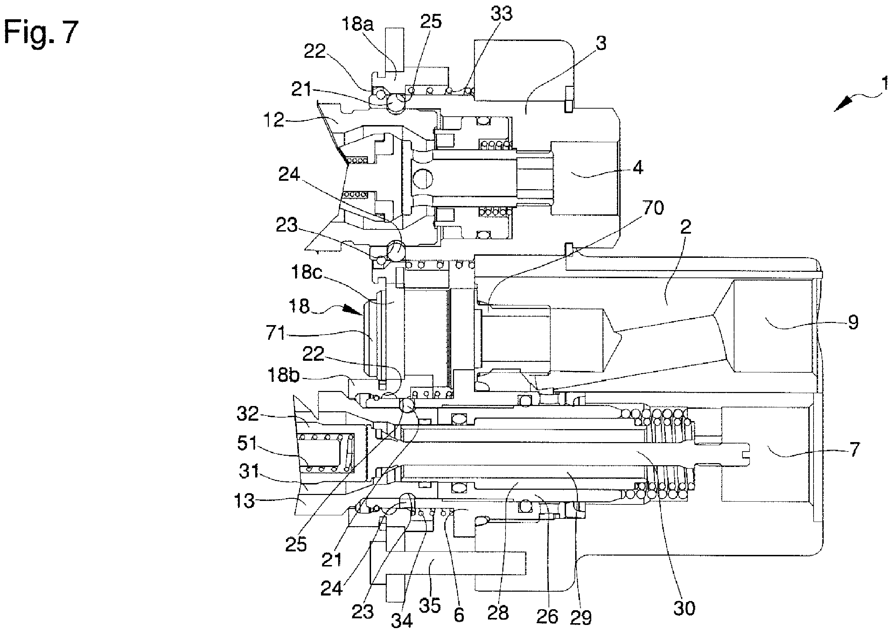

Figure 7 is a sectional view of the device of Figure 2 with the male couplings in the fastening position inside the relative female couplings;

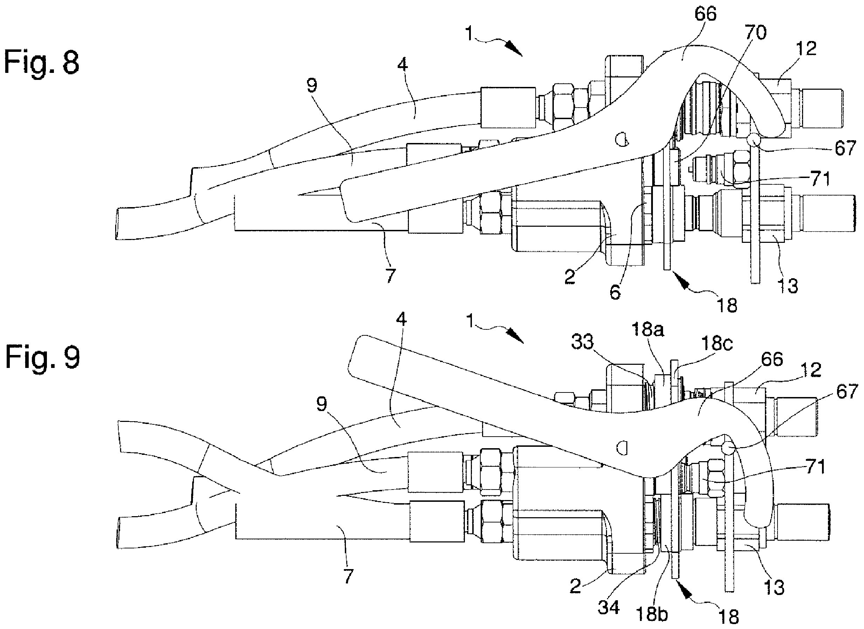

Figure 8 is a side elevation view of a device according to the invention, having the lever means disengaged from the male couplings;
Figure 9 is a side elevation view of the device of Figure 8 with the lever means in engagement with the male couplings.

With particular reference to such figures, globally indicated with reference number 1 is a coupling for the towing vehicle-trailer connection.

The device 1 comprises a base body 2 associable with a trailer (not shown in the illustrations) and wherein is defined at least a first female coupling 3, communicating with a control line 4 connectable to the braking system 5 of the trailer, and at least a second female coupling 6, communicating with at least an additional line 7 connectable to the parking and/or automatic brake 8 of the trailer itself and with at least a by-pass line 9 connectable to an unloading tank 10.

More particularly, the control line 4 is able to supply the braking system 5 of the trailer with a working fluid at a pressure generally between 0 and 150 bar, while the additional line 7 is able to supply a command device 11 of the parking and/or automatic brake 8 at a pressure generally between 15 and 35 bar in such a way as to maintain the parking brake itself open, or deactivated.

The device 1 then comprises also a first and a second male coupling, identified with reference numbers 12 and 13 respectively, which are associable with the towing vehicle and are connectable to valves able to send, respectively, a first and a second control signal to the trailer.

As is known to experts in the sector, these control signals are pressure signals, i.e., they correspond to the sending of the working fluid towards the first and second male couplings 12 and 13 at a first and at a second pressure respectively. More in detail, the first male coupling 12 is able to transmit a first pressure signal for operating the brakes of the trailer while the second male coupling 13 is able to send to the trailer a second substantially constant-pressure signal contained within a predefined range.

In a particular embodiment, not shown in the illustrations, the body 2 also comprises at least a third female coupling 70 intended to receive at least a third male coupling 71 connectable, e.g., to an unloading tank not shown in the illustrations.

The device 1 comprises valve means 17 able to selectively put in communication and isolate between them the additional line 7 and the by-pass line 9 respectively, as a result of the exit and insertion of the second male coupling 13 from/into the second female couplings 6.

It follows, therefore, that as soon as the male couplings 12 and 13 come out of the female couplings 3 and 6, the additional line 7 is placed in communication with the by-pass line 9, by means of the valve means 17, through which the working fluid contained inside it is unloaded into the tank 10, and so the pressure of the working fluid acting on the command device 11 of the parking brake 8 is reduced causing the automatic operation of same,

The device 1 also comprises a connection element 18 which has at least a first ring nut 18a fitted around the first female coupling 3 and at least a second ring nut 18b fitted around the second female coupling 6, where the first and the second ring nuts 18a and 18b are associated integrally, e.g. through a plate 18c.

The connection element 18 is movable with respect to the body 2 between a release position, wherein it allows the displacement of the male couplings 12, 13 with respect to the corresponding female couplings 3, 6, and a fastening position, wherein it prevents the relative displacement thereof.

According to the invention fastening and release means are also provided able to cooperate with one another to allow the locking and unlocking of the male couplings 12 and 13 with respect to the female couplings 3 and 6 as a result of the achievement by the connection element 18 of the fastening position and of the release position, respectively.

Advantageously, the fastening and release means comprise at least two locking elements 21 each of which is associated with the body 2 at a relative female coupling 3, 6 and able to cooperate with the male couplings 12, 13 to prevent the displacement thereof with respect to the relative female coupling 3, 6; the connection element 18 being able to keep the locking elements 21 engaged with the relative male couplings 12, 13 in the fastening position and to allow disengagement in the release position.

More in particular, the fastening and release means comprise at least a first recess 22 defined on each ring nut 18a, 18b and at least a second recess 23 defined on each male coupling 12, 13.

The locking elements 21 are positioned within a relative through hole 24 defined on the body 2, which contain them laterally, and are able to be inserted within the corresponding second recesses 23 as a result of the insertion of the male couplings 12, 13 within the relative female couplings 3, 6.

The connection element 18 in its fastening position keeps pressed the locking elements 21 within the second recesses 23, while in its release position the first recesses 22 are arranged at the locking elements themselves thus allowing the exit of the male couplings 12, 13 from the relative female couplings 3, 6.

More in detail, in the fastening position of the connection element 18 the locking elements 21 rest against a relative abutment surface 25 defined by the connection element itself and which prevents its displacement from the relative second recess 23, while in the release position of the connection element 18, the first recesses 22, by arranging themselves at the relative locking elements 21, allow the latter to come out of the relative second recesses 23.

In the embodiment represented in the illustrations, the locking elements 21 are of the ball type and the first and second recesses 22 and 23 are shaped like a circumference arc.

The valve means 17 comprise at least a first tubular element 26 inserted in a sliding manner within the second female coupling 6 to open/close the connection gap 27 between the additional line 7 and the by-pass line 9.

In particular, the first tubular element 26 is able to press the locking element 21 arranged at the second female coupling 6 within the relative first recess 22 as a result of the exit of the second male coupling 13 from the second female coupling itself and with the connection element 18 in the release position. Following the coming out of the male couplings 12, 13 from the relative female couplings 3, 6, the first ring nut 18a would be free to move, but the connection element 18 is kept in the release position due to the locking of the second ring nut 18b on the relative female coupling 6.

The first tubular element 26 is movable between an idle configuration, which corresponds to the position taken by same following the coming out of the second male coupling 13 from the second female coupling 6 and wherein the additional line 7 is placed in communication with the by-pass line 9, and at least an active configuration, wherein it blocks the connection gap 27, isolating, the one from the other, the additional line 7 from the by-pass line 9. The first tubular element 26 has a plurality of active configurations that occur following the insertion of the second male coupling 13 in the second female coupling 6 until this is locked.

The valve means 17 also comprise a second tubular element 28 inserted sliding inside the first tubular element 26 and defining a first channel 29 for the flow of the working fluid, a first closing element 30 of the first channel itself being provided.

The second tubular element 28 is movable with respect to the first closing element 30 between a closure configuration and an opening configuration of the first channel 29.

The second male coupling 13, in turn, defines a second channel 31 of the working fluid and has a second closing element 32 of the second flow channel 31 movable between a relative opening configuration and a relative closure configuration.

Following the insertion of the second male coupling 13 in the second female coupling 6 the first closing element 30 is able to contact the second closing element 32 to displace it from the closure configuration towards the opening configuration, and the extremity of the second male coupling itself is able to contact the first tubular element 26 to displace it towards an active configuration. The first tubular element 26 is able to drag in its movement the second tubular element 28 to displace it towards the relative opening configuration in order to place in communication with one another the first and second flow channels 29 and 31 of the working fluid.

Advantageously, elastic means 33, 34 are positioned between the body 2 and the connection element 18 and able to counteract the displacement of the latter from the fastening position to the release position.

More in particular, the elastic means 33, 34 comprise first elastic means 33 interposed between the body 2 and the first ring nut 18a and second elastic means 34 interposed between the body 2 and the second ring nut 18b. Preferably, guide means 35 are provided of the displacement of the connection element 18 between the fastening position and the release position.

The guide means 35 comprise a guide element 35a associated integrally with the connection element 18, and in particular with the plate 18c, and inserted sliding inside a seat 35b obtained within the body 2. The seat 35b also defines an end-of-stroke surface against which the guide element 35a rests after the connection element 18 has reached the release position.

In the embodiment shown in the illustrations, the guide element 35a is placed between the first and the second ring nuts 18a and 18b.

The guide means 35 are therefore able to keep the plate 18c substantially orthogonal to the axes of the female couplings 3 and 6 during the displacement of the connection element 18 between the fastening position and the release position.

Advantageously, the device 1 comprises lever means 66, shown in the illustrations 8 and 9, associated movable with the body 2 and able to act on the male couplings 12, 13 to facilitate the insertion thereof within the relative female couplings 3, 6.

More in detail, the lever means 66, e.g. hook-shaped, are able to act on a pin 67 locked together with the male couplings 12, 13. Following the operation of the lever means 66, the connection element 18 moves from the unlocking position to the locking position.

The device 1 also comprises emergency means 36 able to control the displacement of the connection element 18 from the fastening position to the release position as a result of the application of a predefined force on the emergency means themselves.

More in detail, the emergency means 36 comprise at least an actuating element 37 mechanically connected to the connection element 18 and movable with respect to the body 2 between a rest configuration, wherein the connection element 18 can be moved between the fastening position and the release position, and an emergency configuration, wherein it is displaced with respect to the rest configuration and drags the connection element 18 to the release position.

The actuating element 37 is connected to a flexible pulling element 38, of the type of an inextensible cable or a rope, connectable on the opposite side to the trailer. The pulling element 38 is able to move the actuating element 37 with respect to the body 2 as a result of the achievement of the above predefined force. For example, in case the tow bar of the trailer breaks, the pulling element 38 is tensioned by applying a force on the actuating element 37.

In the preferred embodiment shown in the illustrations, the actuating element 37 is associated with the guide element 35a, which is movable in translation with respect to the actuating element itself, with the latter in the idle configuration, to displace the connection element 18 from the fastening position to the release position.

More in detail, the guide element 35a is internally hollow and the actuating element 37 inserts inside it and defines an abutment element 40 able to contact the guide element itself following the movement from the idle configuration to the emergency configuration.

The emergency means 36 then comprise a joint 41 associated with the actuating element 37 on opposite side of the abutment element 40 and connected to the pulling element 38. The joint 41 is therefore able to allow the transfer of the force from the pulling element 38 to the actuating element 37 also in case of a misalignment of same. In particular, the joint 41 is able to rotate with respect to the actuating element 37 by a predefined angle. The ends of stroke of the rotation of the joint 41 with respect to the actuating element 37 are defined by the resting of the joint itself against the body 2. In other words, as a result of the rotation of the joint 41 with respect to the actuating element 37, the joint itself rests against the body 2 and the contact area acts as a fulcrum to allow the transfer of force to the actuating element itself.

More in particular, the actuating element 37 comprises a tie rod 42 inserted through the body 2 and which has a first extremity 42a, with which is associated a nut 43 that inserts within the guide element 35a and the head of which defines the abutment element 40, and a second extremity 42b that protrudes from the body itself and with which is associated the joint 41.

Conveniently, the emergency means 36 comprise further elastic means 44 placed between the actuating element 37 and the body 2 and able to counteract the displacement of the actuating element itself from the rest configuration to the emergency configuration. The further elastic means 44 are, e.g., of the type of a pre-compressed helical spring, inserted within a seat 45 obtained in the body 2 and having an extremity that interacts with the tie rod 42, the latter sliding within the seat 45 by effect of the movement of the actuating element 37, and the opposite extremity which rests against the body 2 or against an element locked together with it.

The operation of the present invention is as follows.

When the male couplings 12 and 13 are arranged outside the female couplings 3 and 6, the connection element 18 is in the release position and is kept in this position by the locking element 21 arranged at the second female coupling 6, which is kept within the relative first recess 22 by the first tubular element 26, the latter being arranged in idle configuration.

The second ring nut 18a is thus locked with respect to the second female coupling 6 in release position and consequently also locks the first ring nut 18a, which instead would be free to move towards the fastening position due to the force applied by the elastic means 33.

In this work configuration, the connection element 18 is then kept in the release position and the elastic means 33 and 34 are compressed.

Following the insertion of the male couplings 12, 13 within the relative female couplings 3, 6, the second recesses 23 defined on the male couplings themselves approach the locking elements 21. As soon as the second recesses 23 arrive at the locking elements 21, the latter are inserted, by effect of their own weight, within the second recesses themselves, consequently freeing the connection element 18 which is pushed by the elastic means 33, 34 into the fastening position.

The insertion of the male couplings 12, 13 within the female couplings 3, 6 can be performed manually or by means of the lever means 66 described above.

In this work configuration, the male couplings 12, 13 are locked inside the relative female couplings 3, 6, inasmuch as the locking elements 21 are retained inside the relative second recesses 23 by the abutment surfaces 25 defined by the connection element 18.

To carry out the removal of the male couplings 12, 13 from the female couplings 3, 6, the connection element 18 must be brought to release position, so that the locking elements 21 can be moved within the relative first recesses 22 by effect of the coming out of the male couplings themselves from the relative female couplings.

The movement of the connection element 18 from the fastening position to the release position is performed manually by acting on the plate 18c.

As mentioned above, in case the tow bar of the trailer breaks or the trailer itself is not fastened properly, the pulling element 38 becomes tensioned by applying a force on the actuating element 37 by means of the joint 41.

In particular, in the event of the pulling element 38 being misaligned with respect to the actuating element 37, the joint 41 rotates with respect to the actuating element 37 until it rests against the body 2 to transfer the tensile force onto the actuating element itself.

As soon as the force applied on the actuating element 37 reaches the intensity corresponding to the preloading of the further elastic means 44, the latter begin to compress, and the actuating element itself starts to move from the idle configuration to the emergency configuration.

During this movement, the abutment element 40 drags, acting on the guide element 35a, the connection element 18, which is in the fastening position, the male couplings 12, 13 being inserted within the relative female couplings 3, 6, towards the release position.

It should be noticed that until the actuating element 37 is in the idle configuration, the connection element 18 is still movable manually between the fastening position and the release position.

In practice it has been ascertained how the described invention achieves the proposed objects and in particular the fact is underlined that the device forming the subject of the present invention allows controlling, in a safe and easy way, the release of both the male couplings from the respective female couplings. Again, the device according to the invention allows ensuring the release of the male couplings in emergency conditions, or, in the case of the trailer tow bar breaking or of the trailer itself not being correctly fastened.

## Claims

1. Device (1) for the towing vehicle-trailer connection, **characterized in that** it comprises:
- a base body (2) associable with a trailer and wherein is defined at least a first female coupling (3), communicating with a control line (4) of the braking system (5) of the trailer, and at least a second female coupling (6), communicating with at least an additional line (7) which acts on the parking and/or automatic brake (8) of the trailer and with at least a by-pass line (9) communicating with an unloading tank (10);
- at least a first and a second male couplings (12, 13) associated with a towing vehicle of the trailer and connectable to the relative braking system (14), where said first and second male couplings (12, 13) can be connected to valves able to send to the same, respectively, a working fluid at a first and at a second pressure and are insertable, respectively, within said first and second female couplings (3, 6); valve means (17) being provided able to be put in communication and isolate between them said additional line (7) with said by-pass line (9), respectively, as a result of the exit and insertion of said male couplings (12, 13) from the relative female couplings (3, 6);
- at least a connection element (18) which has at least a first ring nut (18a) fitted around said first female coupling (3) and at least a second ring nut (18b) fitted around said second female coupling (6), said first and the second ring nuts (18a, 18b) being locked together, said connection element (18) being associated movable with respect to said base body (2) between a release position, wherein it allows the displacement of said male couplings (12, 13) with respect to the relative female couplings (3, 6), and a fastening position, wherein it prevents the displacement of said male couplings (12, 13) with respect to the relative female couplings (3, 6);
- fastening and release means able to cooperate with one another to allow the locking and unlocking of said male couplings (12, 13) with respect to said female couplings (3, 6) as a result of the achievement by said connection element (18) of said fastening position and of said release position, respectively.

2. Device (1) according to claim 1, **characterized in that** said fastening and release means comprise at least a locking element (21) associated with said base body (2) at each of said female couplings (3, 6), at least a first recess (22) defined on each of said ring nuts (18a, 18b) and at least a second recess (23) defined on each of said male couplings (12, 13), said locking elements (21) being able to be inserted in said second recesses (23) as a result of the insertion of the relative male couplings (12, 13) within said female couplings (3, 6), in its fastening position said connection element (18) keeping pressed said locking elements (21) within said second recesses (23) and in its release position said first recesses (22) being arranged at the relative locking elements (21) in order to release the latter and allow the exit of said male couplings (12, 13) from the relative female couplings (3, 6).

3. Device (1) according to claim 2, **characterized in that** said valve means (17) comprise at least a first tubular element (26) movable in a sliding manner within said second female coupling (6) to open/close the connection gap (27) between said additional line (7) and said by-pass line (9), said first tubular element (26) being able to press the locking element (21) arranged at said second female coupling (6) within the relative first recess (22) as a result of the exit of said second male coupling (13) from the second female coupling itself.

4. Device (1) according to one or more of the preceding claims, **characterized in that** it comprises elastic means (33, 34) placed between said base body (2) and said connection element (18) and able to counteract the displacement of the latter from said fastening position to said release position.

5. Device (1) according to one or more of the preceding claims, **characterized in that** it comprises at least a guide element (35a) of the displacement of said connection element (18) between said fastening position and said release position.

6. Device (1) according to one or more of the preceding claims, **characterized in that** it comprises emergency means (36) able to control the displacement of said connection element (18) from said fastening position to said release position as a result of the application of a predefined force on the emergency means themselves.

7. Device (1) according to claim 6, **characterized in that** said emergency means (36) comprise at least an actuating element (37) connected to said connection element (18) and movable with respect to said base body (2) between a rest configuration, wherein said connection element (18) can be moved with respect to the actuating element itself between the fastening position and the release position, and an emergency configuration, wherein it is displaced with respect to the rest configuration and drags said connection element (18) from the fastening position to the release position, and at least a flexible and inextensible pulling element (38) connected on one side to said actuating element (37) and connectable on the opposite side to the trailer, said pulling element (38) being able to move said actuating element (37) with respect to said body (2) as a result of the achievement of said predefined force.

8. Device (1) according to claim 7, **characterized in that** said emergency means (36) comprises further elastic means (44) placed between said actuating element (37) and said body (2) and able to counteract the displacement of the actuating element itself from the rest configuration to the emergency configuration.

9. Device (1) according to one or more of the preceding claims, **characterized in that** said actuating element (37) defines at least an abutment element (40) able to interact with said connection element (18) to displace it from the fastening position to the release position as a result of the displacement of the actuating element itself from the rest configuration to the emergency configuration.

10. Device (1) according to one or more of the preceding claims, **characterized in that** said emergency means (36) comprise at least a joint (41) fitted on said actuating element (37) and associated with said pulling element (38), said joint (41) being able to allow the transfer of the force from said pulling element (38) to said actuating element (37) also in case of a misalignment of same.

11. Device (1) according to claim 10, **characterized in that** said joint (41) is able to rest against said body (2) as a result of its rotation with respect to said actuating element (37).

12. Device (1) according to claim 9 and claim 10 or 11, **characterized in that** said abutment element (40) and said joint (41) are associated at the opposite ends of said actuating element (37).

13. Device (1) according to one or more of the preceding claims, **characterized in that** it comprises guide means (35) of the displacement of said connection element (18).

14. Device (1) according to claim 13, **characterized in that** said guide means (35) comprise at least a guide element (35a) locked together with said connection element (18) and a seat (35b) defined in said body (2) and within which said guide element (35a) is inserted sliding.

15. Device (1) according to one or more of the preceding claims, **characterized in that** said actuating element (37) is able to interact with said guide element (35a) by means of said abutment element (40) to displace said connection element (18) from the fastening position to the release position, said guide element (35a) being movable with respect to the actuating element itself with the latter in rest configuration.

## Patentansprüche

1. Vorrichtung (1) für die Verbindung eines Zugfahrzeugs und Anhängers, **dadurch gekennzeichnet, dass** sie Folgendes umfasst:
- ein Grundkörper (2), der mit einem Anhänger verbunden werden kann und wobei mindestens eine erste Kupplungsbuchse (3) definiert ist, die mit einer Steuerleitung (4) des Bremssystems (5) des Anhängers kommuniziert, und mindestens eine zweite Kupplungsbuchse (6), die mit mindestens einer zusätzlichen Leitung (7) kommuniziert, die auf die Festell- und/oder automatische Bremse (8) des Anhängers wirkt, und mit mindestens einer Bypassleitung (9), die mit einem Entladetank (10) kommuniziert;
- mindestens ein erster und ein zweiter Kupplungsstecker (12, 13), die mit einem Zugfahrzeug des Anhängers verbunden sind und an das entsprechende Bremssystem (14) anschließbar sind, wobei der erste und der zweite Kupplungsstecker (12, 13) an Ventile angeschlossen werden können, um selbigen jeweils ein Arbeitsfluid bei einem ersten und zweiten Druck senden zu können, und diese jeweils in die erste und zweite Kupplungsbuchse (3, 6) einrückbar sind; Ventilmittel (17), die vorgesehen sind, um miteinander kommunizieren zu können und zwischen ihnen die zusätzliche Leitung (7) mit der Bypassleitung (9), infolge des Aus- und Einrückens der Kupplungsstecker (12, 13) in die entsprechenden Kupplungsbuchsen (3, 6) jeweils isolieren zu können;
- mindestens ein Verbindungselement (18), das mindestens eine um die erste Kupplungsbuchse (3) herum installierte erste Ringmutter (18a)und mindestens eine um die zweite Kupplungsbuchse (6) herum installierte zweite Ringmutter (18b) aufweist, wobei die erste und zweite Ringmutter (18a, 18b) miteinander verbunden sind, wobei das Verbindungselement (18) in Bezug auf den Grundkörper (2) zwischen einer Freigabeposition, in der es die Verschiebung der Kupplungsstecker (12, 13) in Bezug auf die jeweiligen Kupplungsbuchsen (3, 6) ermöglicht, und einer Befestigungsposition, in der es die Verschiebung der Kupplungsstecker (12, 13) in Bezug auf die jeweiligen Kupplungsbuchsen (3, 6) verhindert, beweglich verbunden ist;
- Befestigungs- und Freigabemittel, die zusammenwirken können, um die Ver- und Entriegelung der Kupplungsstecker (12, 13) in Bezug auf die Kupplungsbuchsen (3, 6) jeweils infolge des Erreichens der Befestigungsposition und der Freigabeposition des Verbindungselements (18) zu ermöglichen.

2. Vorrichtung (1) nach Anspruch 1, **dadurch gekennzeichnet, dass** die Befestigungs- und Freigabemittel mindestens ein Verriegelungselement (21), das mit dem Grundkörper (2) an jeder der Kupplungsbuchsen (3, 6) verbunden ist, mindestens eine erste Aussparung (22), die an jeder Ringmutter (18a, 18b) definiert ist, und mindestens eine zweite Aussparung (23) umfassen, die auf jedem der Kupplungsstecker (12, 13) definiert ist, , wobei die Verriegelungselemente (21) in die zweite Aussparung (23) infolge des Einrückens der jeweiligen Kupplungsstecker (12, 13) in die Kupplungsbuchsen (3, 6) eingerückt werden können, wobei das Verbindungselement (18) in seiner Befestigungsposition das Verriegelungselement (21) in die zweiten Aussparungen (23) gedrückt hält, und die ersten Aussparungen (22) in ihrer Freigabeposition bei den jeweiligen Verriegelungselementen (21) angeordnet sind, um die Letzteren freizugeben und das Ausrücken der Kupplungsstecker (12, 13) von den jeweiligen Kupplungsbuchsen (3, 6) zu ermöglichen.

3. Vorrichtung (1) nach Anspruch 2, **dadurch gekennzeichnet, dass** die Ventilmittel (17) wenigstens ein erstes Rohrelement (26) umfassen, das in der zweiten Kupplungsbuchse (6) gleitend beweglich ist, um den Verbindungsspalt (27) zwischen der zusätzlichen Leitung (7) und der Bypassleitung (9) zu öffnen/schließen, wobei das erste Rohrelement (26) das Verriegelungselement (21), das an der zweiten Kupplungsbuchse (6) angeordnet ist, in die jeweilige erste Aussparung (22) drücken kann, infolge des Ausrückens des zweiten Kupplungssteckers (13) von der zweiten Kupplungsbuchse.

4. Vorrichtung (1) nach einem oder mehreren der vorhergehenden Ansprüche, **dadurch gekennzeichnet, dass** sie elastische Mittel (33, 34) umfasst, die zwischen dem Grundkörper (2) und dem Verbindungselement (18) platziert werden, und der Verschiebung des Letzteren von der Befestigungsposition in die Freigabeposition entgegenwirken können.

5. Vorrichtung (1) nach einem oder mehreren der vorhergehenden Ansprüche, **dadurch gekennzeichnet, dass** sie mindestens ein Führungselement (35a) der Verschiebung des Verbindungselements (18) zwischen der Befestigungsposition und der Freigabeposition umfasst.

6. Vorrichtung (1) nach einem oder mehreren der vorhergehenden Ansprüche, **dadurch gekennzeichnet, dass** sie Notfallmittel (36) umfasst, die die Verschiebung des Verbindungselements (18) zwischen der Befestigungsposition und der Freigabeposition infolge der Anwendung einer vordefinierten Kraft auf die Notfallmittel selbst steuern können.

7. Vorrichtung (1) nach Anspruch 6, **dadurch gekennzeichnet, dass** die Notfallmittel (36) mindestens ein Betätigungselement (37) umfassen, das mit dem Verbindungselement (18) verbunden ist und in Bezug auf den Grundkörper (2) zwischen einer Ruhekonfiguration, in der das Verbindungselement (18) in Bezug auf das Betätigungselement selbst zwischen der Befestigungsposition und der Freigabeposition bewegt werden kann, und einer Notfallkonfiguration beweglich ist, in der es in Bezug auf die Ruhekonfiguration verschoben wird und das Verbindungselement (18) von der Befestigungsposition in die Freigabeposition zieht, und mindestens ein flexibles und nicht dehnbares Zugelement (38), das an einer Seite mit dem Betätigungselement (37) verbunden ist und auf der anderen Seite mit dem Anhänger verbunden werden kann, wobei das Zugelement (38) das Betätigungselement (37) in Bezug auf den Körper (2) infolge des Erreichens der vordefinierten Kraft bewegen kann.

8. Vorrichtung (1) nach Anspruch 7, **dadurch gekennzeichnet, dass** die Notfallmittel (36) weitere elastische Mittel (44) umfassen, die zwischen dem Betätigungselement (37) und dem Körper (2) platziert sind und der Verschiebung des Betätigungselements selbst von der Ruhekonfiguration in die Notfallkonfiguration entgegenwirken.

9. Vorrichtung (1) nach einem oder mehreren der vorhergehenden Ansprüche, **dadurch gekennzeichnet, dass** das Betätigungselement (37) mindestens ein Widerlagerelement (40) definiert, das mit dem Verbindungselement (18) interagieren kann, um es von der Befestigungsposition in die Freigabeposition infolge der Verschiebung des Betätigungselements selbst von der Ruhekonfiguration in die Notfallkonfiguration zu verschieben.

10. Vorrichtung (1) nach einem oder mehreren der vorhergehenden Ansprüche, **dadurch gekennzeichnet, dass** die Notfallmittel (36) mindestens ein Gelenk (41) umfassen, das an das Betätigungselement (37) angebracht und mit dem Zugelement (38) verbunden ist, wobei das Gelenk (41) die Übertragung der Kraft vom Zugelement (38) auf das Betätigungselement (37) auch im Falle einer Fehlausrichtung desselben ermöglicht.

11. Vorrichtung (1) nach Anspruch 10, **dadurch gekennzeichnet, dass** das Gelenk (41) am Körper (2) infolge seiner Drehung in Bezug auf das Betätigungselement (37) anliegen kann.

12. Vorrichtung (1) nach Anspruch 9 und Anspruch 10 oder 11, **dadurch gekennzeichnet, dass** das Widerlagerelement (40) und das Gelenk (41) mit den gegenüberliegenden Enden des Betätigungselements (37) verbunden sind.

13. Vorrichtung (1) nach einem oder mehreren der vorhergehenden Ansprüche, **dadurch gekennzeichnet, dass** sie Führungsmittel (35) der Verschiebung des Verbindungselements (18) umfasst.

14. Vorrichtung (1) nach Anspruch 13, **dadurch gekennzeichnet, dass** die Führungsmittel (35) mindestens ein Führungselement (35a) umfassen, das mit dem Verbindungselement (18) und einem Sitz (35b), der im Körper (2) definiert ist, verbunden ist und im Führungselement (35a) gleitend eingerückt ist.

15. Vorrichtung (1) nach einem oder mehreren der vorhergehenden Ansprüche, **dadurch gekennzeichnet, dass** das Betätigungselement (37) mit dem Führungselement (35a) mithilfe des Widerlagerelements (40) interagieren kann, um das Verbindungselement (18) von der Befestigungsposition in die Freigabeposition zu verschieben, wobei das Führungselement (35a) in Bezug auf das Betätigungselement selbst mit dem Letzteren in die Ruhekonfiguration bewegt werden kann.

## Revendications

1. Dispositif (1) de raccordement tracteur-remorque, **caractérisé en ce qu'**il comprend :
- un corps de base (2) pouvant être associé à une remorque et dans lequel est défini au moins un premier raccord femelle (3) communiquant avec une conduite de commande (4) du système de freinage (5) de la remorque, et au moins un second raccord femelle (6), communiquant avec au moins une conduite supplémentaire (7) qui agit sur le frein de stationnement et/ou automatique (8) de la remorque et avec au moins une conduite de dérivation (9) communiquant avec une cuve de déchargement (10) ;
- au moins un premier et un second raccord mâle (12, 13) associés à un tracteur de la remorque et pouvant être raccordés au système de freinage (14) relatif, où lesdits premier et second raccords mâles (12, 13) peuvent être raccordés à des soupapes capables d'envoyer à ceux-ci, respectivement, un fluide de travail à une première et à une seconde pression et sont insérables, respectivement, au sein desdits premier et second raccords femelles (3, 6), des moyens de soupape (17) étant fournis capables d'être mis en communication et d'isoler entre eux ladite conduite supplémentaire (7) avec ladite conduite de dérivation (9), respectivement, suite à la sortie et l'insertion desdits raccords mâles (12, 13) des raccords femelles (3, 6) relatifs ;
- au moins un élément de raccordement (18) qui a au moins un premier écrou à oeil (18a) ajusté autour dudit premier raccord femelle (3) et au moins un second écrou à oeil (18b) ajusté autour dudit second raccord femelle (6), lesdits premier et second écrous à oeil (18a, 18b) étant verrouillés ensemble, ledit élément de raccordement (18) étant associé mobile par rapport audit corps de base (2) entre une position de libération, dans laquelle il permet le déplacement desdits raccords mâles (12, 13) par rapport aux raccords femelles (3, 6) relatifs, et une position de fixation, dans laquelle il empêche le déplacement desdits raccords mâles (12, 13) par rapport aux raccords femelles (3, 6) relatifs ;
- des moyens de fixation et de libération capables de coopérer l'un avec l'autre pour permettre le blocage et le déblocage desdits raccords mâles (12, 13) par rapport auxdits raccords femelles (3, 6) suite à l'obtention par ledit élément de raccordement (18) de ladite position de fixation et de ladite position de libération, respectivement.

2. Dispositif (1) selon la revendication 1, **caractérisé en ce que** lesdits moyens de fixation et de libération comprennent au moins un élément de blocage (21) associé audit corps de base (2) au niveau de chacun desdits raccords femelles (3, 6), au moins un premier évidement (22) défini sur chacun desdits écrous à oeil (18a, 18b) et au moins un second évidement (23) défini sur chacun desdits raccords mâles (12, 13), lesdits éléments de blocage (21) étant capables d'être insérés dans ledit second évidement (23) suite à l'insertion des raccords mâles (12, 13) relatifs au sein desdits raccords femelles (3, 6), dans sa position de fixation ledit élément de raccordement (18) gardant enfoncés lesdits éléments de blocage (21) au sein desdits seconds évidements (23) et dans sa position de libération lesdits premiers évidements (22) étant agencés au niveau des éléments de blocage (21) relatifs afin de libérer ces derniers et permettre la sortie desdits raccords mâles (12, 13) des raccords femelles (3, 6) relatifs.

3. Dispositif (1) selon la revendication 2, **caractérisé en ce que** lesdits moyens de soupape (17) comprennent au moins un premier élément tubulaire (26) mobile de manière coulissante au sein desdits seconds raccords femelles (6) pour ouvrir/fermer l'écartement de raccordement (27) entre ladite conduite supplémentaire (7) et ladite conduite de dérivation (9), ledit premier élément tubulaire (26) étant capable d'enfoncer l'élément de blocage (21) agencé au niveau dudit second raccord femelle (6) au sein dudit premier évidement (22) relatif suite à la sortie dudit second raccord mâle (13) dudit second raccord femelle lui-même.

4. Dispositif (1) selon une ou plusieurs des revendications précédentes, **caractérisé en ce qu'**il comprend des moyens élastiques (33, 34) placés entre ledit corps de base (2) et ledit élément de raccordement (18) et capables de contrer le déplacement de ce dernier de ladite position de fixation à ladite position de libération.

5. Dispositif (1) selon une ou plusieurs des revendications précédentes, **caractérisé en ce qu'**il comprend au moins un élément de guidage (35a) du déplacement dudit élément de raccordement (18) entre ladite position de fixation et ladite position de libération.

6. Dispositif (1) selon une ou plusieurs des revendications précédentes, **caractérisé en ce qu'**il comprend des moyens d'urgence (36) capables de commander le déplacement dudit élément de raccordement (18) de ladite position de fixation à ladite position de libération suite à l'application d'une force prédéfinie sur les moyens d'urgence eux-mêmes.

7. Dispositif (1) selon la revendication 6, **caractérisé en ce que** lesdits moyens d'urgence (36) comprennent au moins un élément d'actionnement (37) raccordé audit élément de raccordement (18) et mobile par rapport audit corps de base (2) entre une configuration de repos, dans laquelle ledit élément de raccordement (18) peut être déplacé par rapport à l'élément d'actionnement lui-même entre la position de fixation et la position de libération, et une configuration d'urgence, dans laquelle il est déplacé par rapport à la configuration de repos et traîne ledit élément de raccordement (18) de la position de fixation à la position de libération, et au moins un élément de traction flexible et inextensible (38) raccordé sur un côté audit élément d'actionnement (37) et pouvant être raccordé sur le côté opposé à la remorque, ledit élément de traction (38) étant capable de déplacer ledit élément d'actionnement (37) par rapport audit corps (2) suite à l'obtention de ladite force prédéfinie.

8. Dispositif (1) selon la revendication 7, **caractérisé en ce que** lesdits moyens d'urgence (36) comprennent des moyens élastiques supplémentaires (44) placés entre ledit élément d'actionnement (37) et ledit corps (2) et capables de contrer le déplacement de l'élément d'actionnement lui-même de la configuration de repos à la configuration d'urgence.

9. Dispositif (1) selon une ou plusieurs des revendications précédentes, **caractérisé en ce que** ledit élément d'actionnement (37) définit au moins un élément de butée (40) capable d'interagir avec ledit élément de raccordement (18) pour le déplacer de la position de fixation à la position de libération suite au déplacement de l'élément d'actionnement lui-même de la configuration de repos à la configuration d'urgence.

10. Dispositif (1) selon une ou plusieurs des revendications précédentes, **caractérisé en ce que** lesdits moyens d'urgence (36) comprennent au moins un joint (41) ajusté sur ledit élément d'actionnement (37) et associé audit élément de traction (38), ledit joint (41) étant capable de permettre le transfert de la force dudit élément de traction (38) audit élément d'actionnement (37) également dans le cas d'un désalignement de celui-ci.

11. Dispositif (1) selon la revendication 10, **caractérisé en ce que** ledit joint (41) est capable de reposer contre ledit corps (2) suite à sa rotation par rapport audit élément d'actionnement (37).

12. Dispositif (1) selon la revendication 9 et la revendication 10 ou 11, **caractérisé en ce que** ledit élément de butée (40) et ledit joint (41) sont associés au niveau des extrémités opposées dudit élément d'actionnement (37).

13. Dispositif (1) selon une ou plusieurs des revendications précédentes, **caractérisé en ce qu'**il comprend des moyens de guidage (35) du déplacement dudit élément de raccordement (18).

14. Dispositif (1) selon la revendication 13, **caractérisé en ce que** lesdits moyens de guidage (35) comprennent au moins un élément de guidage (35a) bloqué conjointement audit élément de raccordement (18) et un siège (35b) défini dans ledit corps (2) et au sein duquel ledit élément de guidage (35a) est inséré coulissant.

15. Dispositif (1) selon une ou plusieurs des revendications précédentes, **caractérisé en ce que** ledit élément d'actionnement (37) est capable d'interagir avec ledit élément de guidage (35a) au moyen dudit élément de butée (40) pour déplacer ledit élément de raccordement (18) de la position de fixation à la position de libération, ledit élément de guidage (35a) étant mobile par rapport à l'élément d'actionnement lui-même avec ce dernier dans une configuration de repos.
